# EUROPÄISCHE PATENTSCHRIFT

(11) **EP 0 738 398 B1**
(45) Veröffentlichungstag und Bekanntmachung des Hinweises auf die Patenterteilung: **11.03.1998**
(21) Anmeldenummer: 95903704.5
(22) Anmeldetag: 28.12.1994
(51) Int. Cl.: G02C 9/04

(54) **VORHÄNGER FÜR BRILLEN**
SNAP-ON SUN-GLASSES
FACE SOLAIRE SUPPLEMENTAIRE POUR LUNETTES

(30) Priorität: 03.01.1994 AT 5/94; 27.04.1994 AT 880/94
(43) Veröffentlichungstag der Anmeldung: 23.10.1996
(73) Patentinhaber: Krebs, Martin, 9523 Landskron (AT)
(72) Erfinder: Krebs, Martin, 9523 Landskron (AT)
(74) Vertreter: Hehenberger, Reinhard, Dipl.-Ing.
(86) Internationale Anmeldenummer: AT9400205
(87) Internationale Veröffentlichungsnummer: WO9518987

(56) Entgegenhaltungen:
- GB-A- 416 303
- GB-A- 690 493
- GB-A- 729 482
- US-A- 1 909 796
- US-A- 1 971 055
- US-A- 2 538 692
- US-A- 2 678 584

## Beschreibung

Die Erfindung betrifft eine Vorrichtung zum Befestigen von Vorsatzgläsern an einer Brille, mit zwei die Vorsatzgläser haltenden, in sich geschlossenen und flexiblen Ringen, einem die Ringe verbindenden Bügel und mit Haken zum Festlegen der Vorrichtung an der Brille.

Derartige Vorrichtungen, die auch als "Vorhänger" oder als "Vorsetzer" bezeichnet werden, sind in verschiedenen Ausführungsformen bekannt.

So sind beispielsweise Vorhänger aus Metall bekannt. Solche Vorhänger haben aber den Nachteil, daß sie jeweils nur für eine ganz bestimmt geformte Brille geeignet sind, da sie nur Vorsatzgläser halten können, die eine bestimmte Umrißform haben, und da das Befestigen des Vorhängers bei anders geformten Brillen als der Brille, für die er bestimmt ist, nicht mit der erforderlichen Sicherheit möglich ist.

Es sind auch Vorhänger bekannt, die zwei Kunststoffscheiben besitzen, die über eine Metallspange miteinander verbunden sind, welche an die Fassung einer Brille angeklipst werden können. Da die Scheiben aus Kunststoff bestehen, besteht die Möglichkeit, diese entsprechend der Umrißform der Brille, an welcher der Vorhänger angeklipst werden soll, zuzuschneiden oder zurechtzuschleifen.

Ein Nachteil der zuletzt genannten, bekannten Ausführungsform von Vorhängern ist es, daß das Zuschneiden meist von Hand aus und nicht mit der nötigen Genauigkeit erfolgt, so daß sich ein unhübsches Aussehen ergibt und daß der Vorhänger nur am oberen Rand des Brillengestells festgelegt wird, so daß sich kein sicherer Halt ergibt.

Aus der FR-A-1 036 891, der US-A-1 909 796, der FR-A-987 858 oder der FR-A-1 095 500 sind Vorhänger und Brillen bekannt, deren Ringe in sich geschlossen sind und aus flexiblem Material bestehen, so daß diese an unterschiedliche Formen von Brillengläsern angepaßt werden können.

Brillengläsern angepaßt werden können.

Der Erfindung liegt die Aufgabe zugrunde, eine Vorrichtung der eingangs genannten Gattung in der Weise weiter zu entwickeln, daß mit einer einzigen Ausführungsform Vorsatzgläser mit gängigen Brillenformen entsprechenden Umrißformen an Brillen befestigt werden können.

Erfindungsgemäß wird diese Aufgabe dadurch gelöst, daß die Ringe für die Vorsatzgläser wenigstens teilweise aus unter Wärmeeinwirkung schrumpfendem Werkstoff und/oder wenigstens teilweise aus längenelastischem Werkstoff bestehen, derart, daß die Ringe im Sinne einer Verkürzung ihrer Umfangslänge längenveränderlich sind.

Dadurch, daß bei der Erfindung flexible und wenigstens im Sinne einer Verkürzung ihres Umfanges längenveränderliche Ringe verwendet werden, können sich die Ringe nicht nur genau an die Form der Vorsatzgläser anpassen sondern sie umschließen diese auch zuverlässig, so daß die Vorsatzgläser unabhängig von ihrer Umrißform auf einfache Weise sicher gehalten werden.

Dank der Erfindung kommt man mit Vorrichtungen mit einer Ringgröße oder allenfalls zwei Ringgrößen für den Großteil der auf dem Markt befindlichen Brillen aus.

Bei der Erfindung bestehen die Ringe beispielsweise wenigstens teilweise aus unter Wärmeeinwirkung schrumpfendem und/oder längenelastischem, vorzugsweise gummielastischem, Werkstoff, so daß die Vorsatzgläser befestigt werden können, indem sich die Ringe durch Schrumpfen und/oder elastisch an die Vorsatzgläser anlegen und dabei eine Form annehmen, die der Umrißform der Vorsatzgläser entspricht.

Bei der Erfindung müssen, wie zuvor erwähnt, die Ringe nicht zur Gänze aus längsschrumpfendem und/oder längselastischem Werkstoff bestehen, sondern es genügt, daß wenigstens ein Teil des Werkstoffs der Ringe unter Wärmeeinwirkung schrumpfend und/oder elastisch ist. Es genügt, wenn der übrige Teil des Werkstoffes, aus dem der Ring besteht, flexibel ist, so daß er sich an die Umrißform der entsprechend der Form der Gläser der Brille zugeschliffenen Vorsatzgläser anpassen kann.

Die Erfindung ist nicht auf eine bestimmte Art von Vorsatzgläsern beschränkt. Alle Vorsatzgläser, die für Vorhänger verwendet werden, ganz gleich ob aus Glas oder aus Kunstglas, ob getönt oder polarisierend, oder sich unter Einwirkung von Licht verfärbend, können mit der erfindungsgemäßen Vorrichtung befestigt werden.

In einer praktischen Ausführungsform der Erfindung ist vorgesehen, daß die Ringe an den Enden des Bügels befestigt sind. Bei dieser Variante ist bevorzugt, wenn die Bereiche des Bügels, über welche dieser mit den Ringen verbunden ist, flexibel sind. Auf diese Art und Weise kann auch der Bereich des in der Regel aus Metall bestehenden, federelastischen Bügels, über welche dieser mit den Ringen verbunden ist, ohne weiteres an die Umrißform des Vorsatzglases angepaßt werden, so daß sich auch dort ein harmonisches Aussehen ergibt und der Ring auch in den Bereichen, in denen der Bügel an den Ringen befestigt ist, zur Gänze am Rand des Vorsatzglases anliegt.

In einer bevorzugten Ausführungsform der Erfindung ist vorgesehen, daß an den Enden des Bügels Haken zum Festlegen der Vorrichtung an einer Brille abstehen. Solche Haken zum Befestigen an einer Brille können auch an den Ringen selbst, unmittelbar neben den Enden des Bügels befestigt sein. Um den Halt der Vorrichtung der Erfindung an einer Brille zu verbessern, kann vorgesehen sein, daß an den Ringen wenigstens je ein weiterer Haken im Abstand von den Stellen, an welchen der Bügel mit den Ringen verbunden ist, vorgesehen ist. Diese weiteren Haken greifen an der Brille seitlich und/oder von unten her an.

Bevorzugt ist es im Rahmen der Erfindung, wenn die Bereiche des Bügels, über welchen dieser mit den Ringen verbunden ist, durch Einschnitte flexibel sind. Dadurch kann insbesondere ein aus Metall bestehender Bügel, sehr leicht an die Umrißform der Vorsatzgläser angepaßt werden.

Um die Vorsatzgläser in den Ringen sicher festzulegen, gibt es verschiedene Möglichkeiten. Neben einer einfachen Möglichkeit, die Ringe an den Rändern der Vorsatzgläser festzukleben, ist es im Rahmen der Erfindung bevorzugt, wenn jeder Ring an seiner Seite, die dem in ihm festzulegenden Vorsatzglas zugekehrt ist, eine ringsum laufende Nut aufweist. Dabei kann vorgesehen sein, daß die Nut eine im wesentlichen V-förmige Querschnittsform besitzt.

In einer alternativen Ausführungsform kann vorgesehen sein, daß jeder Ring an seiner Seite, die dem in ihm zu zu befestigenden Vorsatzglas zugekehrt ist, eine ringsum laufende Rippe aufweist. Dabei ist bevorzugt, daß die Rippen in der Mitte der Innenfläche der Ringe vorgesehen sind.

Je nach der Ausführung des Gestells der Brille, an dem die Vorrichtung der Erfindung festgelegt werden soll, bewähren sich unterschiedliche Ausführungsformen der Haken an den bzw. im Bereich der Enden des (Metall-)Bügels und an den Ringen selbst. Eine Ausführungsform ist im Rahmen der Erfindung dadurch gekennzeichnet, daß wenigstens ein Teil der Haken einfach abgewinkelte Haken sind. Eine ander Möglichkeit besteht darin, daß wenigstens ein Teil der Haken gekröpft ausgebildet ist, wobei die Kröpfung im Bereich des am Ring befestigten Endes der Haken vorgesehen ist. Bei beiden Ausführungsformen können die Haken auch unterschiedlich ausgebildet sein, so daß an einer Vorrichtung gekröpfte und einfache Haken vorgesehen sein können.

Die Enden des Bügels und/oder die Haken können mit den Ringen im Rahmen der Erfindung durch Verschweißen oder durch Verkleben verbunden sein.

Im Rahmen der Erfindung ist es aber auch möglich und bevorzugt, daß die Enden des Bügels mit den Ringen durch Umspritzen der Enden des Bügels mit dem Werkstoff der Ringe verbunden sind. Bei dieser Ausführungsform wird auf einfache Art und Weise beispielsweise gleich beim Herstellen der Ringe im Spritzgußverfahren eine sichere Verbindung der Enden des Bügels mit den beiden Ringen des erfindungsgemäßen Vorhängers erreicht.

Ebenso ist im Rahmen der Erfindung in Betracht gezogen, daß einzelne Haken oder alle Haken aus ggf. durch eine (Metall-) Einlage ausgesteiftem Kunststoff bestehen. Dieser Kunststoff muß nicht derselbe sein wie der Kunststoff der Ringe, dennoch ist bevorzugt, wenn die Haken mit den Ringen einstückig ausgebildet sind.

In einer weiteren Ausführungsform der Erfindung kann vorgesehen sein, daß die im Bereich der Enden des Bügels vorgesehenen Haken zum Festlegen der Vorrichtung an einer Brille mit dem Bügel einstückig ausgebildet sind. Diese Ausführungsform bietet den Vorteil, daß ein gesondertes Befestigen der im Bereich der Enden des Bügels angeordneten Haken, über die der Vorhänger an einer Brille befestigt werden kann, nicht erforderlich ist.

In einer anderen Ausführungsform der Erfindung ist vorgesehen, daß wenigstens je ein weiterer Haken zum Festlegen der Vorrichtung an einer Brille an den Ringen durch Umspritzen von Hakenteilen mit dem die Ringe bildenden Werkstoff festgelegt ist. Diese Ausführungsform erlaubt ein Befestigen dieser Haken gleich beim Herstellen der Ringe, das beispielsweise im Spritzgußverfahren erfolgt.

Es ist aber auch möglich, die weiteren Haken mit dem Werkstoff der Ringe einstückig auszubilden, was ebenfalls den Vorteil einer vereinfachten Herstellung bietet. Nicht nur bei dieser Ausführungsform sondern auch bei anderen Ausführungsformen besteht die Möglichkeit, daß die weiteren Haken durch Einlagen aus gegenüber dem Werkstoff der Ringe steiferem Werkstoff, wie Kunststoff oder Metall, ausgesteift sind.

Um eine sichere Verbindung der Enden des Bügels, der Haken und/oder der weiteren Haken der erfindungsgemäßen Vorrichtung zu gewährleisten, wenn diese in den Kunststoff der Ringe eingebettet sind, kann im Rahmen der Erfindung vorgesehen sein, daß wenigstens in den in Kunststoff der Ringe eingebetteten Teilen an den Enden des Bügels und/oder der Haken und/oder der weiteren Haken mit Löchern od.dgl. Durchbrechungen versehen sind. Wenn solche Durchbrechungen im Bereich der in die Ringe eingebetteten Enden des Bügels vorgesehen sind, ist dieser leicht verformbar, so daß sich die Ringe auch in diesem Bereich leicht an die Umrißform der in die Ringe eingesetzten Vorsatzgläser anpassen lassen.

Schließlich besteht bei der Erfindung noch die Möglichkeit, daß die weiteren Haken aus Kunststoff gefertigt sind.

Der die Ringe verbindende Bügel kann bei der erfindungsgemäßen Vorrichtung auch aus Kunststoff bestehen.

Weitere Einzelheiten und Merkmale der Erfindung ergeben sich aus der nachstehenden Beschreibung von Ausführungsbeispielen der Erfindung, in der auf die Zeichnungen Bezug genommen wird.

Es zeigt
Fig. 1 in Ansicht eine erste Ausführungsform eines Vorhängers,
Fig. 2 den Bügel des Vorhängers in Schrägansicht,
Fig. 3 eine Ausführungsform eines Hakens,
Fig. 4 eine andere Ausführungsform eines Hakens,
Fig. 5 eine zweite Ausführungsform eines Vorhängers,
Fig. 6 in Schrägansicht den Bügel des Vorhängers von Fig. 5,
Fig. 7 eine Ausführungsform eines Hakens,
Fig. 8 in vergrößertem Maßstab die rechte Hälfte des in Fig. 5 gezeigten Vorhängers,
Fig. 9 in Draufsicht die eine Hälfte des Bügels von Fig. 6 mit einem Haken in zwei Ausführungsformen,
Fig. 10 im Schnitt längs der Linie X-X von Fig. 8 einen Ring (ohne den Bügel),
Fig. 11 eine alternative Ausführungsform in einem Schnitt analog Fig. 10,
Fig. 12 eine weitere Ausführungsform eines Vorhängers,
Fig. 13 ein Ausführungsbeispiel eines Bügels mit einstückig angeformten Haken,
Fig. 14 eine Einzelheit des Bügels von Fig. 14 in Draufsicht,
Fig. 15 eine Einzelheit des Bügels im Bereich eines Hakens in Seitenansicht,
Fig. 16 in vergrößertem Maßstab die Stelle, an der die Enden des Bügels mit einem der Ringe des Vorhängers verbunden sind,
Fig. 17 einen Schnitt längs der Linie XVII-XVII in Fig. 16,
Fig. 18 eine Draufsicht zu Fig. 16,
Fig. 19 in vergrößertem Maßstab ein Ausführungsbeispiel für das Befestigen eines Hakens,
Fig. 20 eine Draufsicht zu Fig. 19 und
Fig. 21 eine andere Ausführungsform eines Vorhängers.

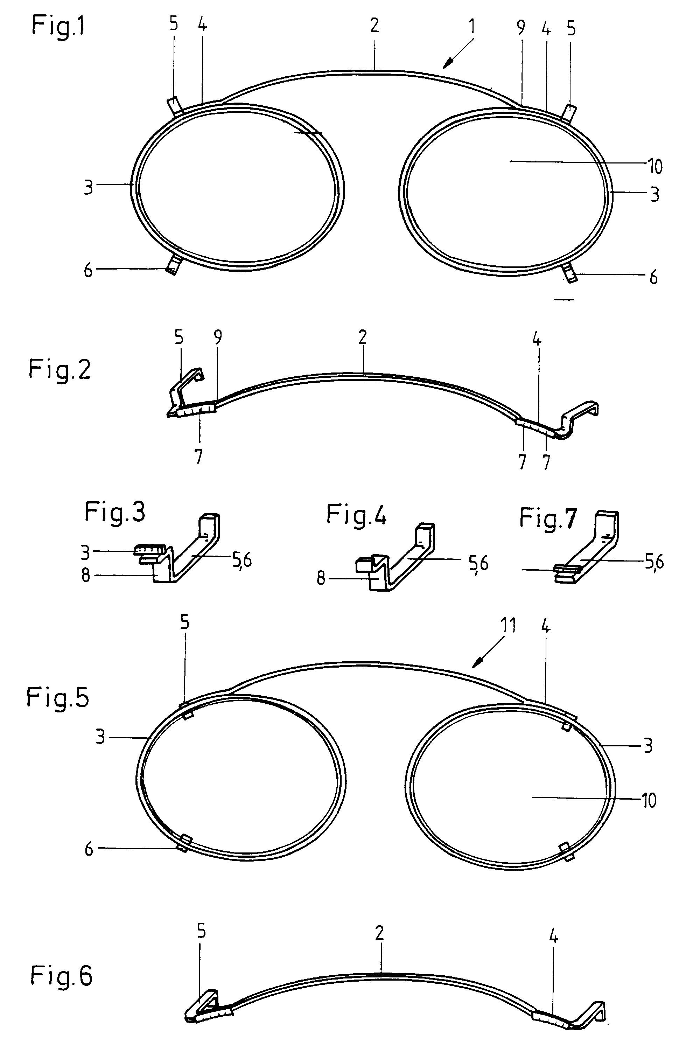

Ein Vorhänger 1 besteht bei der in Fig. 1 und 2 gezeigten Ausführungsform aus einem Bügel 2 und zwei Ringen 3. Der Bügel 2 ist im Bereich seiner Enden 4 mit den Ringen 3 durch Kleben oder Schweißen verbunden. An den Enden des Bügels 2 ist je ein Haken 5 vorgesehen, mit dem der Vorhänger 1 an einer Brille befestigt werden kann. Die Haken 5 greifen an der Brille von oben her an. Die Haken 5 können auch an den Ringen 3 befestigt sein.

In einem von dem Bereich, in dem die Ringe 3 mit den Enden 4 des Bügels 2 verbunden sind, einen Abstand aufweisenden Bereich sind an den Ringen 3 weitere Haken 6 vorgesehen, die an der Brille von unten her oder seitlich angreifen, so daß der Vorhänger 1 sicher an der Brille befestigt werden kann.

Der Bügel 2 kann aus Metall, aus einem Kunststoff oder aus einem Naturstoff bestehen. Er sollte aber die für ein sicheres Befestigen des Vorhängers der Erfindung an einer Brille (aufklipsen) nötige Elastizität besitzen.

Die Enden 4 des Bügels 2 können insbesondere wenn er aus Metall besteht, durch mehrere Einschnitte 7 biegbar gemacht sein, so daß sie durch plastisches Verformen eine den Umrißform der Vorsatzgläser 10, die in den Ringen 3 befestigt sind, entsprechende Krümmung annehmen können.

Die Haken 5 und 6 können ebenso wie der Bügel 2 mit den Ringen 3 durch Kleben oder Schweißen verbunden sein.

Die Ringe 3 sind aus flexiblem Werkstoff, beispielsweise Kunststoff, gefertigt und können sich daher der Umrißform der entsprechend der Form Brillengläser der Brille, an welcher der Vorhänger 1 aufgesetzt werden soll, zurechtgeschliffenen Vorsatzgläsern 10 anpassen.

Damit sich die Ringe 3 um die Vorsatzgläser 10 herum an diese anlegen können, sind die Ringe 3 wenigstens teilweise aus einem Werkstoff gefertigt, der im Sinne einer Verkürzung längenveränderlich ist. Ein solcher Werkstoff kann ein gummielastischer Kunststoff sein. Möglich ist eine einstückige Ausführung der Ringe 3 aus gummielastischem Werkstoff. Die Ringe 3 können bevorzugt auch zur Gänze oder teilweise aus einem, beispielsweise unter Wärmeeinwirkung, unter Verkürzung seiner Länge schrumpfendem Werkstoff bestehen. Bei dieser Ausführungsform werden die Vorsatzgläser 10 innerhalb der Ringe 3 positioniert und dann der Schrumpfvorgang ausgelöst, so daß sich die Ringe 3 an den Außenumfang der Vorsatzgläser 10 anlegen und diese festhalten.

Die bei der Ausführungsform des Vorhängers 1 von Fig. 1 gezeigten Haken 5 und 6 haben vorzugsweise die in Fig. 3 oder 4 gekröpfte Ausführungsform.

Zwischen dem Bügel 2 und seinen Enden 4 ist eine Knickstelle 9 vorgesehen, so daß die Glasebene oder die Lage der Vorsatzgläser 10 genau an die Brille angepaßt werden kann.

Mit den Haken 5 und 6 ist auch ein Höhenausgleich zwischen Metall- und Kunststofffassungen möglich, um die Ringe 3 in Einklang mit der Größe der Fassung der Brille, an welcher der Vorhänger 1 befestigt werden soll, zu bringen.

Die Haken 5 und 6 sind vorzugsweise aus Metall entsprechend den gezeigten Ausführungsformen geprägt.

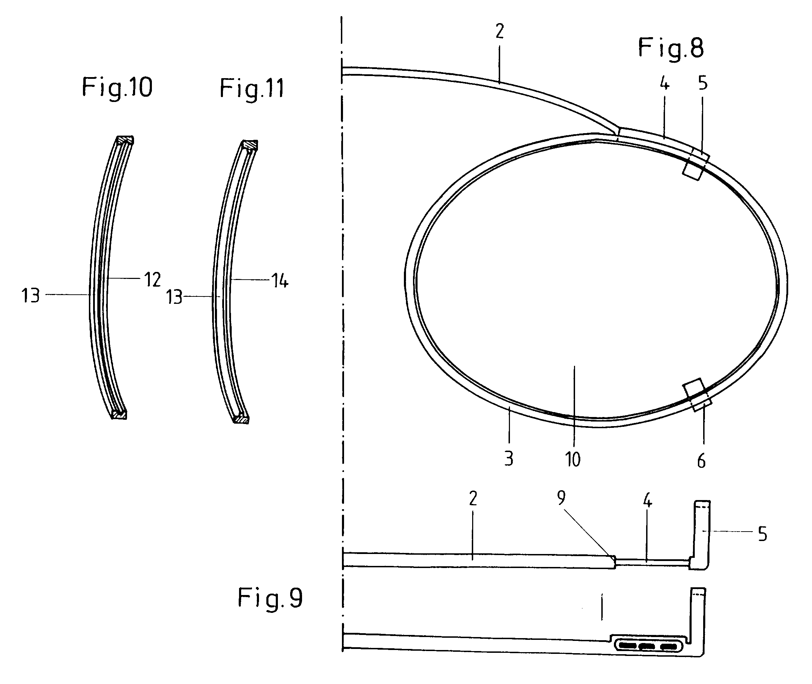

Bei der in Fig. 5 gezeigten Ausführungsform eines Vorhängers 11 sind die Haken 5 und 6 so wie in Fig. 7 gezeigt ausgebildet, d.h. einfache Haken ohne die Kröpfung der Ausführungsformen der Fig. 3 und 4. Weitere Einzelheiten der in den Fig. 5 und 6 gezeigten Ausführungsform sind den Fig. 8 und 9 zu entnehmen.

Um den Sitz der Vorsatzgläser 10 in den Ringen 3 zu verbessern, können die Vorsatzgläser 10 einfach in die Ringe 3 eingeklebt werden. Die Vorsatzgläser 10 können auch an ihrem Rand einen Facettenschliff aufweisen, der in eine ringsumlaufende Nut 12 an der dem Vorsatzglas 10 zugekehrten Innenfläche 13 des Ringes 3 eingreift. So wird auch ohne Klebung oder wenigstens ohne durchgehende Klebung ein sicherer Sitz des Vorsatzglases 10 im Ring 3 des Vorhänger oder 11 gewährleistet (Fig. 10).

Eine alternative Ausführungsform ist in Fig. 11 gezeigt. Bei dieser ist in der Mitte der dem Vorsatzglas 10 zugekehrten Innenfläche 13 des Ringes 3 eine ringsumlaufende Rippe 14 mit im gezeigten Ausführungsbeispiel rechteckigem Querschnitt (jede andere Querschnittsform ist denkbar) vorgesehen. Diese Rippe 14 greift in eine entsprechende Nut am Umfang des Vorsatzglases 10 ein, so daß auch bei dieser Ausführungsform das Vorsatzglas 10 im Ring 3 sicher gehalten ist.

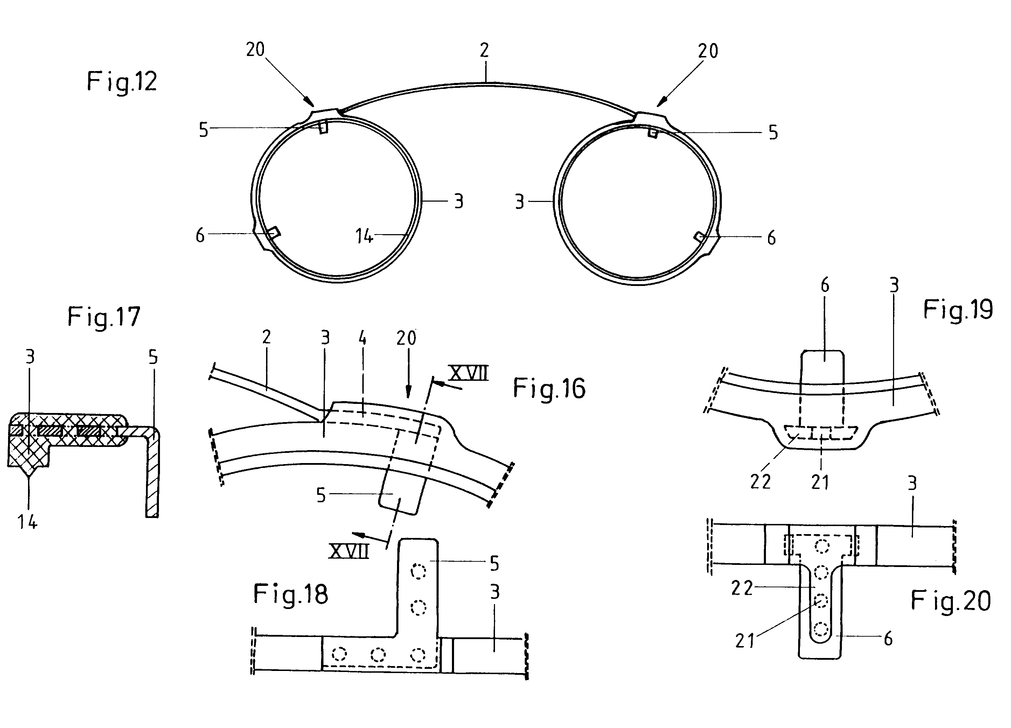

Bei der in Fig. 12 gezeigten Ausführungsform eines erfindungsgemäßen Vorhängers ist ein Bügel 2 vorgesehen, der, wie in Fig. 13 bis 15 gezeigt, mit den im Bereich seiner Enden 4 vorgesehenen Haken 5 einstückig ausgebildet ist. Der Bügel 2 wird mit den Ringen 3 des Vorhängers dadurch verbunden, daß seine Enden 4 und wenigstens teilweise die mit ihm einstückig ausgebildeten Haken 5 in den Werkstoff der Ringe 3 in den in Fig. 12 mit 20 bezeichneten Bereichen eingebettet sind. Dies kann beispielsweise dadurch erfolgen, daß die Enden 4 des Bügels 2 und wenigstens teilweise die Haken 5 beim Herstellen der Ringe 3 im Spritzgußverfahren mit dem Werkstoff der Ringe 3 umspritzt werden. Um eine sichere Verbindung zwischen den Enden 4 des Bügels 2 und dem Werkstoff der Ringe 3 zu erreichen, können in den im Werkstoff der Ringe 3 eingebetteten Abschnitten lochförmige Durchbrüche 21 vorgesehen sein (siehe Fig. 14 und 15).

Auch die im Abstand von den Enden 4 des Bügels 2 an den Ringen befestigten, weiteren Haken 6 können wenigstens teilweise in den Werkstoff der Ringe 3 eingebettet sein, was ebenfalls durch Umspritzen von hakenförmigen Teilen mit dem Werkstoff der Ringe 3 erfolgen kann. Dabei besteht die Möglichkeit, die Haken 5 und/oder 6 zur Gänze mit dem Werkstoff der Ringe 3 zu umhüllen, oder aber es wird nur ein Teil der Haken 5 oder 6 mit dem Werkstoff der Ringe 3 umhüllt.

Bei der in den Fig. 19 und 20 gezeigten Ausführungsform sind im Bereich der Haken 6 mit Löchern 21 versehene, versteifende Einlagen 23 vorgesehen, welche den Haken 6 die nötige Festigkeit ohne Beeinträchtigen ihrer elastischen Verformbarkeit geben.

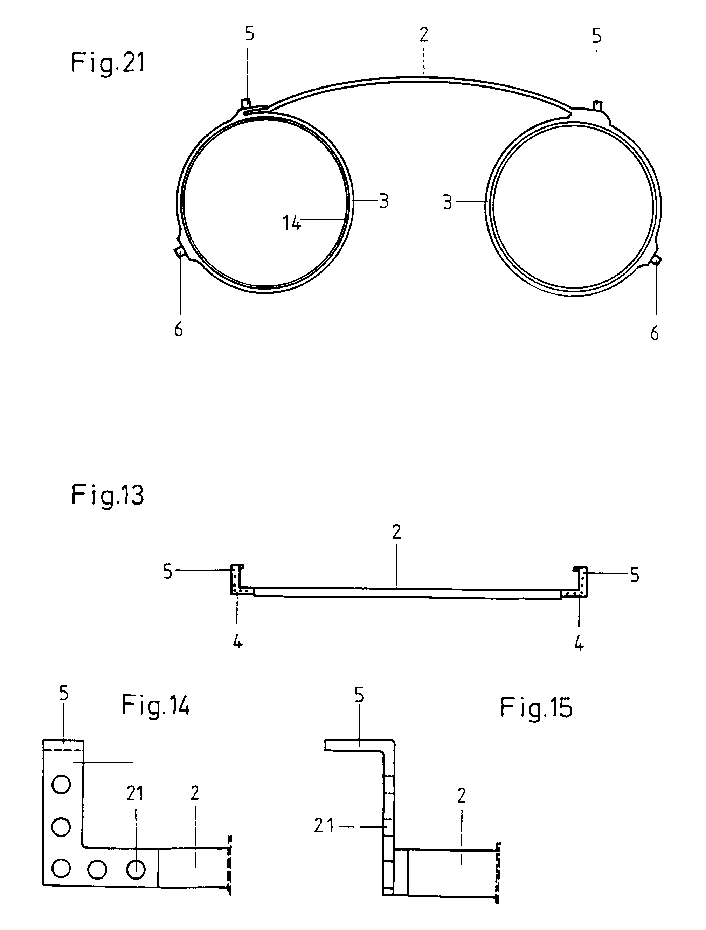

Bei der in Fig. 21 gezeigten Ausführungsform eines erfindungsgemäßen Vorhängers oder Vorhängers sind die Haken 5 und 6 so wie dies an Hand der Ausführungsform, die in den Fig. 1 bis 4 beschrieben ist, ausgebildet, so daß die Ringe 3 gegenüber dem Gestell der Brille, an dem der Vorhänger oder Vorhänger befestigt wird, nach innen versetzt angeordnet sind.

Es ist noch darauf hinzuweisen, daß die Einlagen 22 der Haken 6 aus einem Werkstoff bestehen können, der steifer und härter ist als jener der Ringe 3, wobei die Einlagen 22 beispielsweise aus Kunststoff oder aus Metall gefertigt sind.

Die Haken 5 und/oder 6 können auch ohne aussteifende Einlagen ausgebildet und mit den Ringen 3 einstückig ausgeführt sein.

Dies ist insbesondere für die weiteren Haken 6 bevorzugt.

Es ist erkennbar, daß mit der Erfindung ein variabler Vorhänger, beispielsweise aus einer Metall-Kunststoffkombination, zur Verfügung gestellt wird. Der Grundgedanke der Erfindung besteht darin, daß sich der Ring genau an die Form und Größe der zugeschliffenen Vorsatzgläser anpassen kann. Auf diese Art und Weise kann für jede beliebige Form und Größe einer Fassung ein Vorhänger oder Vorhänger mit genau der gleichen Größe und Form der Brillengläser der Brille, auf welcher der Vorhänger aufzuhängen ist, gefertigt werden.

Zusammenfassend kann ein Ausführungsbeispiel der Erfindung wie folgt dargestellt werden:

Eine Vorrichtung 1 zum Befestigen von Vorsatzgläsern 10 (Vorhänger) besteht aus einem Bügel 2, der an seinen Enden 4 je einen Ring 3 aus flexiblem und im Sinne einer Verkürzung seiner Umfangslänge schrumpfbarem Werkstoff trägt. An den freien Enden 4 des Bügels 2 sind Haken 5 vorgesehen. Weitere Haken 6 sind an den Ringen 3 des Vorhängers 1 vorgesehen. Über die Haken 5 und 6 kann der Vorhänger 1 an einer Brille befestigt werden. Die Enden des Bügels 2 und die Haken 6 sind in den die Ringe 3 bildenden Werkstoff eingebettet. Da die Ringe 3 aus flexiblem und verkürzbarem Werkstoff bestehen, passen sie sich ohne weiteres jeder in der Praxis vorkommenden Größe und Umrißform von Vorsatzgläsern an, so daß die Vorsatzgläser 10 der Form der Brille genau angepaßt werden können und nicht für jedes Brillenformat und jede Brillenform ein eigener Grundkörper für einen Vorhänger 1 vorrätig gehalten werden muß.

## Patentansprüche

1. Vorrichtung (1, 11) zum Befestigen von Vorsatzgläsern (10) an einer Brille, mit zwei die Vorsatzgläser (10) haltenden, in sich geschlossenen und flexiblen Ringen (3), einem die Ringe (3) verbindenden Bügel (2) und mit Haken (5, 6) zum Festlegen der Vorrichtung (1, 11) an der Brille, dadurch gekennzeichnet, daß die Ringe (3) für die Vorsatzgläser (10) wenigstens teilweise aus unter Wärmeeinwirkung schrumpfendem Werkstoff und/oder wenigstens teilweise aus längenelastischem Werkstoff bestehen, derart, daß die Ringe (3) im Sinne einer Verkürzung ihrer Umfangslänge längenveränderlich sind.

2. Vorrichtung nach Anspruch 1, dadurch gekennzeichnet, daß die Ringe (3) an den Enden (4) des Bügels (2) befestigt sind.

3. Vorrichtung nach Anspruch 1 oder 2, dadurch gekennzeichnet, daß die Enden (4) des Bügels (2), über welche dieser mit den Ringen (3) verbunden ist, flexibel sind.

4. Vorrichtung nach Anspruch 3, dadurch gekennzeichnet, daß die Enden (4) des Bügels (2), über welche dieser mit den Ringen (3) verbunden ist, durch Einschnitte (7) flexibel sind.

5. Vorrichtung nach einem der Ansprüche 1 bis 4, dadurch gekennzeichnet, daß im Übergangsbereich zwischen dem Bügel (2) und seinen Enden (4) eine Knickstelle (9) vorgesehen ist.

6. Vorrichtung nach einem der Ansprüche 1 bis 5, dadurch gekennzeichnet, daß Haken (5) zum Festlegen der Vorrichtung (1, 11) an einer Brille von den Enden (4) des Bügels (2) abstehen.

7. Vorrichtung nach einem der Ansprüche 1 bis 6, dadurch gekennzeichnet, daß an jedem Ring (3) wenigstens je ein weiterer Haken (6) zum Festlegen der Vorrichtung (1, 11) an einer Brille im Abstand von der Stelle, an welcher der Ring (3) mit dem Bügel (2) verbunden ist, vorgesehen ist.

8. Vorrichtung nach einem der Ansprüche 1 bis 7, dadurch gekennzeichnet, daß wenigstens ein Teil der Haken (5, 6) gekröpft ausgebildet ist, wobei die Kröpfung (8) im Bereich des am Ring (3) befestigten Endes des Hakens (5, 6) vorgesehen ist (Fig. 3, 4).

9. Vorrichtung nach einem der Ansprüche 1 bis 8, dadurch gekennzeichnet, daß wenigstens einer der Haken (5, 6) ein einfach abgewinkelter Haken ist (Fig. 7).

10. Vorrichtung nach einem der Ansprüche 1 bis 9, dadurch gekennzeichnet, daß die Enden (4) des Bügels (2) und/oder die Haken (5, 6) mit den Ringen (3) durch Verschweißen verbunden sind.

11. Vorrichtung nach einem der Ansprüche 1 bis 10, dadurch gekennzeichnet, daß die Enden (4) des Bügels (2) und/oder die Haken (5, 6) mit den Ringen (3) durch Verkleben verbunden sind.

12. Vorrichtung nach einem der Ansprüche 1 bis 11, dadurch gekennzeichnet, daß die Enden (4) des Bügels (2) mit den Ringen (3) durch Umspritzen der Enden (4) des Bügels (2) mit dem Werkstoff der Ringe (3) verbunden sind.

13. Vorrichtung nach einem der Ansprüche 1 bis 12, dadurch gekennzeichnet, daß die im Bereich der Enden (4) des Bügels (2) vorgesehenen Haken (5) zum Festlegen der Vorrichtung an einer Brille mit dem Bügel (2) einstückig ausgebildet sind.

14. Vorrichtung nach einem der Ansprüche 1 bis 13, dadurch gekennzeichnet, daß wenigstens je ein weiterer Haken (6) zum Festlegen der Vorrichtung an einer Brille an den Ringen (3) durch Umspritzen von Hakenteilen (22) mit dem die Ringe (3) bildenden Werkststoff festgelegt ist.

15. Vorrichtung nach einem der Ansprüche 1 bis 14, dadurch gekennzeichnet, daß die weiteren Haken (6) mit dem Werkstoff der Ringe (3) einstückig ausgebildet sind.

16. Vorrichtung nach einem der Ansprüche 1 bis 15, dadurch gekennzeichnet, daß die weiteren Haken (6) durch Einlagen (22) aus gegenüber dem Werkstoff der Ringe (3) steiferem Werkstoff, wie Kunststoff oder Metall, ausgesteift sind.

17. Vorrichtung nach einem der Ansprüche 1 bis 16, dadurch gekennzeichnet, daß wenigstens die in den in Kunststoff der Ringe (3) eingebetteten Teile an den Enden des Bügels (2) und/oder der Haken (5) und/oder der weiteren Haken (6) mit Löchern (21) od.dgl. Durchbrechungen versehen sind.

18. Vorrichtung nach einem der Ansprüche 1 bis 17, dadurch gekennzeichnet, daß die Haken (5) und/oder die weiteren Haken (6) aus einem vom Werkstoff der Ringe (3) verschiedenen Werkstoff, insbesondere Kunststoff, bestehen.

19. Vorrichtung nach einem der Ansprüche 1 bis 18, dadurch gekennzeichnet, daß der Bügel (2) aus, gegebenenfalls durch eine Metalleinlage ausgesteiftem, Werkstoff besteht.

20. Vorrichtung nach einem der Ansprüche 1 bis 19, dadurch gekennzeichnet, daß jeder Ring (3) an seiner Innenfläche (13), die dem in ihm zu befestigenden Vorsatzglas (10) zugekehrt ist, eine ringsum laufende Nut (12) aufweist.

21. Vorrichtung nach Anspruch 20, dadurch gekennzeichnet, daß die Nut (12) eine im wesentlichen V-förmige Querschnittsform besitzt.

22. Vorrichtung nach einem der Ansprüche 1 bis 21, dadurch gekennzeichnet, daß jeder Ring (3) an seiner Innenfläche (13), die dem in ihm zu zu befestigenden Vorsatzglas (10) zugekehrt ist, eine ringsum laufende Rippe (14) aufweist.

23. Vorrichtung nach Anspruch 22, dadurch gekennzeichnet, daß die Rippen (14) in der Mitte der Innenfläche (13) der Ringe (3) vorgesehen sind.

## Claims

1. Device (1, 11) for attaching clip-on lenses (10) to a pair of spectacles, with two self-contained and flexible rings (3) holding the clip-on lenses (10), with a bow (2) connecting the rings (3) and with hooks (5, 6) for securing the device (1, 11) to the spectacles, characterised in that the rings (3) for the clip-on lenses (10) consist at least partly of material shrinking under the action of heat and/or at least partly of longitudinally elastic material in such a way that the rings (3) are adjustable in length in the sense of shortening of their circumferential length.

2. Device according to claim 1, characterised in that the rings (3) are secured to the ends (4) of the bow (2).

3. Device according to claim 1 or 2, characterised in that the ends (4) of the bow (2), by means of which said bow is connected to the rings (3), are flexible.

4. Device according to claim 3, characterised in that the ends (4) of the bow (2) via which said bow is connected to the rings (3), are flexible by means of incisions (7).

5. Device according to one of claims 1 to 4, characterised in that a bending point (9) is provided in the transitional area between the bow (2) and its ends (4).

6. Device according to one of claims 1 to 5, characterised in that hooks (5) for securing the device (1, 11) to a pair of spectacles project from the ends (4) of the bow (2).

7. Device according to one of claims 1 to 6, characterised in that at least one respective further hook (6) for securing the device (1, 11) to a pair of spectacles is provided on each ring (3) at a spacing from the point at which the ring (3) is connected to the bow (2).

8. Device according to one of claims 1 to 7, characterised in that at least some of the hooks (5, 6) is angled in design, the angle (8) being provided in the area of the end of the hook (5, 6) secured to the ring (3) (Figures 3, 4).

9. Device according to one of claims 1 to 8, characterised in that at least one of the hooks (5, 6) is a hook with a single angle (Figure 7).

10. Device according to one of claims 1 to 9, characterised in that the ends (4) of the bow (2) and/or the hooks (5, 6) are connected to the rings (3) by welding.

11. Device according to one of claims 1 to 10, characterised in that the ends (4) of the bow (2) and/or the hooks (5, 6) are connected to the rings (3) by gluing.

12. Device according to one of claims 1 to 11, characterised in that the ends (4) of the bow (2) are connected to the rings (3) by casting the material material of the rings (3) around the ends (4) of the bow (2).

13. Device according to one of claims 1 to 12, characterised in that the hooks (5) provided in the area of the ends (4) of the bow (2) for securing the device to a pair of spectacles are integrally formed with the bow (2).

14. Device according to one of claims 1 to 13, characterised in that at least one further hook (6) for securing the device to a pair of spectacles is in each case secured to the rings (3) by casting the material forming the rings (3) around hook portions (22).

15. Device according to one of claims 1 to 14, characterised in that the further hooks (6) are integrally formed with the material of the rings (3).

16. Device according to one of claims 1 to 15, characterised in that the further hooks (6) are stiffened by inserts (22) by means of material, such as plastics or metal, which is more rigid than the material of the rings (3).

17. Device according to one of claims 1 to 16, characterised in that at least the parts embedded in the plastics of the rings (3) are provided with holes (21) or the like apertures at the ends of the bow (2) and/or of the hooks (5) and/or of the further hooks (6).

18. Device according to one of claims 1 to 17, characterised in that the hooks (5) and/or the further hook (6) consist of a material, particularly plastics, which is different from the material of the rings (3),.

19. Device according to one of claims 1 to 18, characterised in that the bow (2) consists of a material if necessary stiffened by a metal insert.

20. Device according to one of claims 1 to 19, characterised in that each ring (3) has a surrounding groove (12)on its inner surface (13) facing the clip-on lens (10) to be secured thereto.

21. Device according to claim 20, characterised in that the groove (12) has a substantially V-shaped cross-section.

22. Device according to one of claims 1 to 21, characterised in that each ring (3) has a surrounding rib (14)on is inner surface (13) facing the clip-on lens (10) to be secured thereto.

23. Device according to claim 22, characterised in that the ribs (14) are provided in the centre of the inner surface (13) of the rings (3).

## Revendications

1. Dispositif (1,11) pour la fixation de verres auxiliaires (10) sur des lunettes, comportant deux anneaux (3) fermés, flexibles, qui tiennent les verres auxiliaires (10), un pont (2) qui relie les anneaux (3) et des crochets (5, 6) pour fixer le dispositif (1, 11) sur les lunettes, caractérisé par le fait que les anneaux (3) pour les verres auxiliaires (10) sont réalisés au moins partiellement en un matériau rétractable sous l'action de la chaleur et/ou au moins partiellement en un matériau extensible, de telle sorte que la longueur des anneaux (3) peut être modifiée dans le sens d'une diminution de la circonférence desdits anneaux

2. Dispositif selon la revendication 1, caractérisé par le fait que les anneaux (3) sont fixés aux extrémités (4) du pont (2).

3. Dispositif selon la revendication 1 ou 2, caractérisé par le fait que les extrémités (4) du pont (2), par l'intermédiaire desquelles ledit pont est fixé aux anneaux (3), sont flexibles.

4. Dispositif selon la revendication 3, caractérisé par le fait que les extrémités (4) du pont (2), par l'intermédiaire desquelles ledit pont est fixé aux anneaux (3), sont rendues flexibles par des entailles (7).

5. Dispositif selon une des revendications 1 à 4, caractérisé par le fait qu'un point de pliage (9) est prévu dans la zone de transition entre le pont (2) et les extrémités (4) de celui-ci.

6. Dispositif selon une des revendications 1 à 5, caractérisé par le fait que des crochets (5) pour la fixation du dispositif (1, 11) sur des lunettes s'étendent vers l'extérieur à partir des extrémités (4) du pont (2).

7. Dispositif selon une des revendications 1 à 6, caractérisé par le fait qu'au moins un crochet (6) supplémentaire pour la fixation du dispositif (1, 11) sur des lunettes est prévu sur chaque anneau (3), à distance du point où l'anneau (3) est lié au pont (2).

8. Dispositif selon une des revendications 1 à 7, caractérisé par le fait qu'au moins une partie des crochets (5, 6) est coudée, le coude (8) étant prévu dans la région de l'extrémité du crochet (5, 6) fixée à l'anneau (3) (figures 3, 4).

9. Dispositif selon une des revendications 1 à 8, caractérisé par le fait qu'au moins un des crochets (5, 6) est un crochet à pliage simple (figure 7).

10. Dispositif selon une des revendications 1 à 9, caractérisé par le fait que les extrémités (4) du pont (2) et/ou les crochets (5, 6) sont liés aux anneaux (3) par soudage.

11. Dispositif selon une des revendications 1 à 10, caractérisé par le fait que les extrémités (4) du pont (2) et/ou les crochets (5, 6) sont liés aux anneaux (3) par collage.

12. Dispositif selon une des revendications 1 à 11, caractérisé par le fait que les extrémités (4) du pont (2) sont liées aux anneaux (3) par surmoulage des extrémités (4) du pont (2) avec le matériau des anneaux (3).

13. Dispositif selon une des revendications 1 à 12, caractérisé par le fait que les crochets (5) pour la fixation du dispositif sur des lunettes prévus dans la région des extrémités (4) du pont (2) sont formés d'une pièce avec le pont (2).

14. Dispositif selon une des revendications 1 à 13, caractérisé par le fait qu'au moins un crochet (6) supplémentaire pour la fixation du dispositif sur des lunettes est fixé sur chacun des anneaux (3) par surmoulage de parties de crochet (22) avec le matériau qui constitue les anneaux (3).

15. Dispositif selon une des revendications 1 à 14, caractérisé par le fait que les crochets (6) supplémentaires sont formés d'une pièce avec le matériau des anneaux (3).

16. Dispositif selon une des revendications 1 à 15, caractérisé par le fait que les crochets (6) supplémentaires sont rigidifiés par des inserts (22) en un matériau doté d'une rigidité supérieure à celle du matériau des anneaux (3), tel que par exemple de la matière plastique ou du métal.

17. Dispositif selon une des revendications 1 à 16, caractérisé par le fait qu'au moins les parties noyées dans la matière plastique des anneaux (3), aux extrémités du pont (2) et/ou des crochets (5) et/ou des crochets (6) supplémentaires, sont pourvues de trous (21) ou de crevées similaires.

18. Dispositif selon une des revendications 1 à 17, caractérisé par le fait que les crochets (5) et/ou les crochets (6) supplémentaires sont en un matériau différent de celui des anneaux (3), notamment en matière plastique.

19. Dispositif selon une des revendications 1 à 18, caractérisé par le fait que le pont (2) est en un matériau éventuellement rigidifié par un insert en métal.

20. Dispositif selon une des revendications 1 à 19, caractérisé par le fait que chaque anneau (3) présente une rainure (12) annulaire dans sa surface intérieure (13) tournée vers le verre auxiliaire (10) à fixer dans ledit anneau .

21. Dispositif selon la revendication 20, caractérisé par le fait que la rainure (12), en section transversale, a essentiellement la forme d'un V.

22. Dispositif selon une des revendications 1 à 21, caractérisé par le fait que chaque anneau (3) présente une nervure (14) annulaire sur sa surface intérieure (13) tournée vers le verre auxiliaire (10) à fixer dans ledit anneau.

23. Dispositif selon la revendication 22, caractérisé par le fait que les nervures (14) sont prévues au milieu de la surface intérieure (13) des anneaux (3).
